# FASCICULE DE BREVET EUROPEEN

(11) **EP 0 694 133 B1**
(45) Date de publication et mention de la délivrance du brevet: **04.06.1997**
(21) Numéro de dépôt: 94907586.5
(22) Date de dépôt: 17.02.1994
(51) Int. Cl.: F16D 65/092, F16D 65/097

(54) **FREIN A DISQUE UTILISANT UN PATIN TIRE A APPUI PERMANENT**
SCHEIBENBREMSE MIT GEZOGENEN, SPIELFREI GEFÜHRTEN BREMSBELÄGEN
DISK BRAKE USING A PERMANENT CONTACT DRAWN PAD

(30) Priorité: 15.04.1993 FR 9304393
(43) Date de publication de la demande: 31.01.1996
(73) Titulaire: Bosch Systemes de Freinage, 93700 Drancy (FR)
(72) Inventeur: LE DEIT, Gérard, F-77181 Courtry (FR)
(74) Mandataire: Bentz, Jean-Paul
(86) Numéro de dépôt international: FR9400175
(87) Numéro de publication internationale: WO9424454

(56) Documents cités:
- EP-A- 0 002 399
- EP-A- 0 357 469
- US-A- 4 044 864

## Description

La présente invention concerne un frein à disque pour véhicule automobile, comprenant un premier support fixe par rapport au véhicule, un second support conformé en étrier et monté coulissant par rapport au premier, des patins dont chacun est maintenu par l'un des supports pour résister aux forces d'entraînement auxquelles il est soumis en cas de freinage, et un moteur de frein associé au second support et susceptible d'être actionné pour provoquer l'application desdits patins sur le disque suivant un mouvement sensiblement perpendiculaire à ce dernier, chaque patin présentant une zone centrale de friction où s'applique la résultante des forces d'entraînement et deux extrémités latérales dont la première est décalée par rapport à la zone centrale dans le sens de rotation du disque et dont la seconde au moins présente un profil d'entraînement, le support de ce patin présentant deux logements dont le second offre un profil de retenue coopérant avec ce profil d'entraînement dans une zone d'accrochage pour retenir ce patin lorsqu'il est sollicité dans le sens de rotation du disque par les forces d'entraînement, et la première extrémité au moins de chaque patin présentant une surface de contact externe propre à buter, dans une zone d'appui, sur une surface de contact interne correspondante d'un premier appui prévu sur le premier logement du support de ce patin.

Des freins à disque de ce type sont connus depuis longtemps dans l'art antérieur, et un exemple en est donné dans le brevet US 4 044 864.

D'un point de vue théorique, ces freins présentent a priori l'avantage de permettre au patin, sur lequel s'appliquent les efforts d'entraînement en cas de freinage, de transmettre ces efforts au support qui le maintient en place, c'est-à-dire généralement au premier support appelé "chape", à travers chacune des deux extrémités de ce patin, dont l'une travaille ainsi en traction et l'autre en appui.

D'un point de vue concret, la situation est cependant très différente et beaucoup moins avantageuse, la simultanéité des efforts de traction et de poussée n'étant pratiquement jamais obtenue.

En effet, dans les freins connus du type précité, la répartition des efforts de traction et de poussée dépend de façon extrêmement critique à la fois des dimensions du patin et du support qui le reçoit, ces dimensions étant elles-mêmes non seulement soumises aux tolérances de fabrication, mais aussi aux déformations variables du frein sous l'effet d'efforts de freinage plus ou moins intenses, et/ou d'élévations de température plus ou moins importantes.

Dans ce contexte, l'invention a pour but de proposer un frein à disque et à étrier coulissant, dans lequel la transmission au support de patin des efforts reçus par ce dernier peut être réalisée aux deux extrémités du patin sans être soumise de façon gênante à l'influence de paramètres indésirables tels que ceux qui viennent d'être évoqués.

A cette fin, le frein à disque de l'invention est essentiellement caractérisé en ce que chaque patin est sollicité par rapport à son support et vers la zone d'appui par une force élastique présentant au moins une première composante orientée suivant le rayon du disque qui passe par la zone centrale de friction, en ce que chaque patin présente une relative liberté de rotation dans son plan autour de la zone d'accrochage, en ce que les surfaces de contact interne et externe définissent ensemble dans la zone d'appui une tangente dans un plan contenant le patin, en ce qu'une droite reliant la zone d'accrochage à la zone d' appui définit avec ladite tangente un angle à l'intérieur duquel se trouve une partie de la zone centrale de friction, et en ce que cet angle est obtus et inférieur à un angle plat.

Selon un mode de réalisation simple de l'invention, l'une au moins des deux surfaces de contact a un profil arrondi, et ces surfaces présentent des rayons de courbure différents dans la zone d'appui au moins.

L'une des deux surfaces de contact peut alors être essentiellement concave et l'autre convexe, chacune ayant un profil arrondi et chaque surface de contact concave ayant un rayon de courbure supérieur au rayon de courbure de la surface convexe correspondante.

Le profil d'entraînement prévu sur le patin prend avantageusement la forme d'une encoche ouverte vers l'extérieur du disque et le profil de retenue prévu sur le support de patin comprend une patte de retenue orientée vers l'intérieur du disque et engagée dans cette encoche.

La première composante de la force élastique est par exemple centrifuge et la force élastique présente éventuellement une seconde composante perpendiculaire au rayon du disque passant par la zone centrale du patin et orientée dans le sens de rotation du disque.

Pour optimiser l'efficacité du freinage dans les deux sens de marche du véhicule, il est possible de prévoir que chaque patin comporte une surface de contact externe et un profil d'entraînement à chacune de ses extrémités.

Dans ce cas, où deux zones d'appui sont définies sur le support de patin de part et d'autre de ce patin, chaque extrémité latérale de patin présente de préférence, entre sa surface de contact externe et son profil d'entrainement, une largeur supérieure à une largeur minimale que présente le logement correspondant du support de patin au delà de la zone d'appui vers l'extérieur du disque, ce dont il résulte que les deux extrémités latérales du patin sont simultanément en appui sur le support de patin dans leurs zones d'appui respectives.

Enfin, le contrôle des forces transmises par la première extrémité du patin peut encore être amélioré en faisant en sorte que la surface de contact interne du support de ce patin à cette extrémité soit sensiblement plane dans la zone d'appui.

D'autres caractéristiques et avantages de l'invention ressortiront clairement de la description qui en est faite ci-après, à titre indicatif et nullement limitatif, en référence aux dessins annexés, dans lesquels :

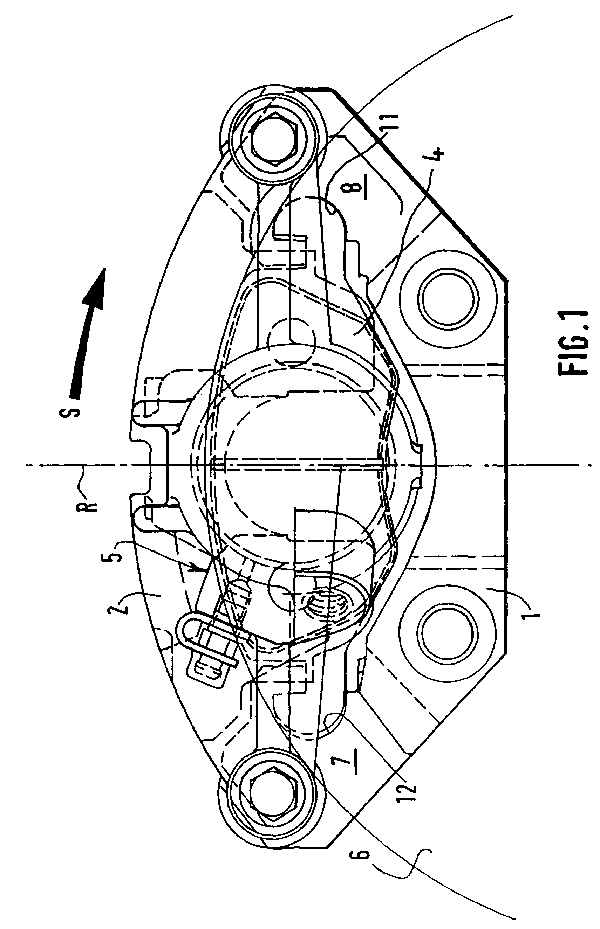

- la Figure 1 est une vue de face d'un frein à disque conforme à l'invention ;
- la Figure 2 est une vue schématique illustrant le principe de l'invention ; et
- la Figure 3 est une vue schématique illustrant une caractéristique particulière de l'invention.

L'invention concerne de façon générale les freins à disque à étrier coulissant destinés à équiper les véhicules automobiles.

De tels freins comprennent un premier support 1, appelé "chape", fixe par rapport au véhicule, un second support 2 conformé en étrier et monté coulissant par rapport au premier, des patins 3, 4 dont chacun est maintenu par l'un des supports, généralement par la chape 1, pour résister aux forces d'entraînement auxquelles il est soumis en cas de freinage, et un moteur de frein 5 associé au second support 2 et susceptible d'être actionné pour provoquer l'application des patins 3, 4 sur le disque 6 suivant un mouvement sensiblement perpendiculaire à ce dernier.

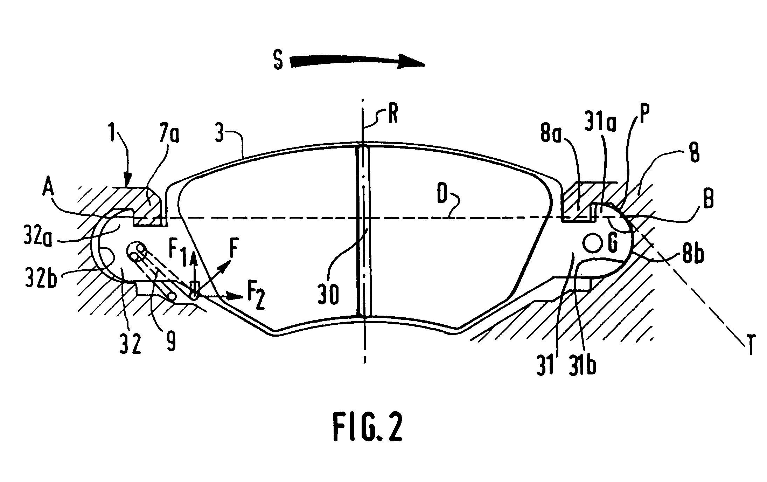

Chaque patin 3, 4 présente de façon classique une zone centrale de friction, telle que 30 (figure 2), et deux extrémités latérales 31, 32 dont la première 31 est décalée par rapport à la zone centrale 30 dans le sens de rotation S du disque 6 et dont la seconde 32 au moins présente un profil d'entraînement 32a.

De son côté, le support de ce patin, par exemple la chape 1 présentant un profil de retenue 7a coopérant avec le profil d'entraînement 32a du patin 3, dans une zone d'accrochage au voisinage du point A, pour retenir ce patin lorsqu'il est sollicité dans le sens de rotation S du disque 6 par les forces d'entraînement.

Par ailleurs, la première extrémité 31 au moins de chaque patin, tel que 3, présente une surface de contact externe 31b propre à buter, dans une zone d'appui au voisinage du point B, sur une surface de contact interne correspondante 8b d'un premier appui 8 prévu sur le support 1 de ce patin.

Selon l'invention, chaque patin tel que 3 est sollicité par rapport à son support 1 et vers la zone d'appui par une force élastique F présentant au moins une première composante F1 orientée suivant le rayon R du disque 6 qui passe par la zone centrale de friction 30, cette force étant par exemple exercée par un ressort 9 disposé sur la seconde extrémité du patin (figure 2).

Chaque patin est dimensionné par rapport au support de manière à présenter une relative liberté de rotation dans son plan autour de la zone d'accrochage, c'est-à-dire pour effectuer une rotation dans le plan de la figure 2 et centrée sur le point A.

Les surfaces de contact interne et externe 8b, 31b définissent ensemble dans la zone d'appui une tangente T dans un plan contenant le patin, et la droite D reliant la zone d'accrochage A à la zone d'appui B définit avec cette tangente T un angle G.

Selon une caractéristique importante de l'invention, l'angle G est obtus, inférieur à un angle plat, et contient la zone centrale de friction 30.

L'une au moins des deux surfaces de contact a très avantageusement un profil arrondi, et ces surfaces présentent des rayons de courbure différents, au moins dans la zone d'appui c'est-à-dire au voisinage du point B.

Dans le mode de réalisation le plus simple, l'une des deux surfaces de contact est concave et l'autre convexe, une autre alternative pouvant consister à utiliser une surface convexe et une surface plane.

En réalité, même dans le cas où l'une des deux surfaces de contact est concave, il reste avantageux de donner à cette dernière un profil P sensiblement plan dans la zone d'appui, comme représenté sur la figure 2.

Le profil d'entraînement 32a prévu sur le patin prend par exemple la forme d'une encoche ouverte vers l'extérieur du disque et le profil de retenue 7a prévu sur le support de patin 1 celle d'une patte de retenue orientée vers l'intérieur du disque et engagée dans cette encoche.

De préférence, la première composante F1 de la force élastique F exercée par le ressort 9 est centrifuge et cette force élastique F présente une seconde composante F2 qui est perpendiculaire au rayon R du disque 6 passant par la zone centrale du patin et orientée dans le sens de rotation du disque, cette distribution de forces permettant de mettre en permanence le patin dans la position vers laquelle il se déplace naturellement sous l'effet des forces de freinage qui s'exercent dans la zone centrale 30 et qui tendent à le faire tourner autour de la zone d'accrochage A.

Grâce à ces caractéristiques, les jeux qu'il est nécessaire de prévoir pour le coulissement satisfaisant des patins n'interviennent plus dans la transmission des efforts par les extrémités des patins, la répartition de ces efforts étant donc libérée de l'influence de la maîtrise imparfaite de ces jeux, ainsi que de leurs éventuelles variations.

Comme le montrent les figures, chaque patin peut comporter une surface de contact externe 31b, 32b et un profil d'entraînement 31a, 32a à chacune de ses extrémités pour permettre un freinage aussi efficace pour la marche arrière du véhicule que pour la marche avant.

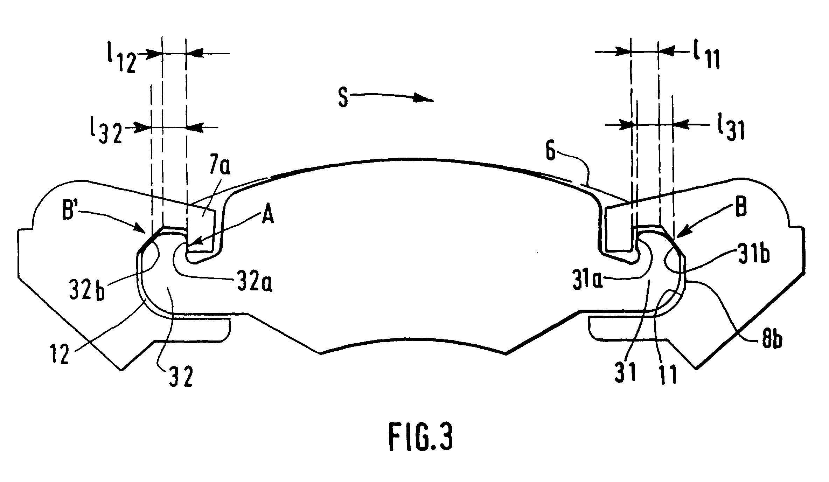

Dans ce cas, comme le montre la figure 3, chaque extrémité latérale 31, 32 du patin présente de préférence entre sa surface de contact externe 31b, 32b et son profil d'entraînement 31a, 32a, une largeur l₃₁, l₃₂ supérieure à une largeur minimale l₁₁, l₁₂ que présente le logement correspondant 11, 12 du support de patin au delà de la zone d'appui B, B' vers l'extérieur du disque 6, ce dont il résulte que les deux extrémités latérales 31, 32 du patin sont simultanément en appui sur le support de patin dans leurs zones d'appui respectives B, B'.

## Revendications

1. Frein à disque pour véhicule automobile, comprenant un premier support (1) fixe par rapport au véhicule, un second support (2) conformé en étrier et monté coulissant par rapport au premier, des patins (3, 4) dont chacun est maintenu par l'un des supports (1) pour résister aux forces d'entraînement auxquelles il est soumis en cas de freinage, et un moteur de frein (5) associé au second support (2) et susceptible d'être actionné pour provoquer l'application desdits patins sur le disque (6) suivant un mouvement sensiblement perpendiculaire à ce dernier, chaque patin (3) présentant une zone centrale de friction (30) où s'applique la résultante des forces d'entraînement et deux extrémités latérales (31, 32) dont la première (31) est décalée par rapport à la zone centrale dans le sens de rotation (S) du disque (6) et dont la seconde (32) au moins présente un profil d'entraînement (32a), le support de ce patin présentant deux logements (11, 12) dont le second (12) offre un profil de retenue (7a) coopérant avec ce profil d'entraînement dans une zone d'accrochage (A) pour retenir ce patin lorsqu'il est sollicité dans le sens de rotation du disque par les forces d'entraînement, et la première extrémité au moins (31) de chaque patin présentant une surface de contact externe (31b) propre à buter, dans une zone d'appui (B), sur une surface de contact interne correspondante (8b) d'un premier appui (8) prévu sur le premier logement (11) du support de ce patin, caractérisé en ce que chaque patin est sollicité par rapport à son support et vers la zone d'appui par une force élastique (F) présentant au moins une première composante (F1) orientée suivant le rayon (R) du disque (6) qui passe par la zone centrale de friction (30), en ce que chaque patin présente une relative liberté de rotation dans son plan autour de la zone d'accrochage (A), en ce que les surfaces de contact interne et externe (8b, 31b) définissent ensemble dans la zone d'appui une tangente (T) dans un plan contenant le patin, en ce qu'une droite (D) reliant la zone d'accrochage (A) à la zone d'appui (B) définit avec ladite tangente (T) un angle (G) à l'intérieur duquel se trouve une partie de la zone centrale de friction (30), et en ce que cet angle est obtus et inférieur à un angle plat.

2. Frein à disque suivant la revendication 1, caractérisé en ce que l'une au moins des deux surfaces de contact (31b) a un profil arrondi, et en ce que ces surfaces présentent des rayons de courbure différents dans la zone d'appui au moins.

3. Frein à disque suivant la revendication 2, caractérisé en ce que l'une des deux surfaces de contact (8b, 31b) est concave et l'autre convexe, chaque surface de contact concave ayant un rayon de courbure supérieur au rayon de courbure de la surface convexe correspondante.

4. Frein à disque suivant la revendication 3, caractérisé en ce que les deux surfaces de contact ont un profil arrondi, chaque surface de contact concave ayant un rayon de courbure supérieur au rayon de courbure de la surface convexe correspondante.

5. Frein à disque suivant l'une quelconque des revendications précédentes, caractérisé en ce que le profil d'entraînement (32a) comprend une encoche prévue sur le patin et ouverte vers l'extérieur du disque et en ce que le profil de retenue (7a) comprend une patte de retenue prévue sur le support de patin, orientée vers l'intérieur du disque et engagée dans cette encoche.

6. Frein à disque suivant la revendication 5, caractérisé en ce que la première composante (F1) de la force élastique est centrifuge.

7. Frein à disque suivant l'une quelconque des revendications précédentes, caractérisé en ce que la force élastique présente une seconde composante (F2) perpendiculaire au rayon (R) du disque (6) passant par la zone centrale du patin et orientée dans le sens (S) de rotation du disque.

8. Frein à disque suivant l'une quelconque des revendications précédentes, caractérisé en ce que chaque patin comporte une surface de contact externe et un profil d'entraînement à chacune de ses extrémités.

9. Frein à disque suivant la revendication 8, dans lequel deux zones d'appui (B, B') sont définies sur le support de patin de part et d'autre du patin, caractérisé en ce que chaque extrémité latérale (31, 32) du patin présente, entre sa surface de contact externe (31b, 32b) et son profil d'entraînement (31a, 32a), une largeur (l₃₁, l₃₂) supérieure à une largeur minimale (l₁₁, l₁₂) que présente le logement correspondant (11, 12) du support de patin au delà de la zone d'appui (B, B)' vers l'extérieur du disque (6), ce dont il résulte que les deux extrémités latérales (31, 32) du patin sont simultanément en appui sur le support de patin dans leurs zones d'appui respectives (B, B').

10. Frein à disque suivant l'une quelconque des revendications précédentes, caractérisé en ce que ladite surface de contact interne est sensiblement plane (P) dans la zone d'appui.

## Patentansprüche

1. Scheibenbremse für ein Kraftfahrzeug, mit einem ersten Träger (1), der bezüglich des Fahrzeugs feststehend ist, einem zweiten Träger (2), der als Bremssattel ausgebildet und verschiebbar bezüglich des ersten Trägers angebracht ist, Bremsbelägen (3, 4), von denen jeder von einem der Träger (1) gehalten ist, um Mitnahmekräften entgegenzuwirken, denen er bei einer Bremsung ausgesetzt ist, und einer Bremsbetätigungsvorrichtung (5), die dem zweiten Träger (2) zugeordnet ist und betätigt werden kann, um das Anlegen der Bremsbeläge an die Scheibe (6) mit einer Bewegung hervorzurufen, die im wesentlichen senkrecht zu der Scheibe ist, wobei jeder Bremsbelag (3) eine zentrale Reibungszone (30) aufweist, auf welche die Resultierende der Mitnahmekräfte einwirkt, und zwei seitliche Enden (31, 32), von denen das erste (31) bezüglich der Mittelzone in der Drehrichtung (S) der Scheibe (6) versetzt ist und von denen wenigstens das zweite (32) ein Mitnahmeprofil (32a) aufweist, wobei der Träger dieses Bremsbelags zwei Aufnahmen (11, 12) aufweist, von denen die zweite (12) ein Halteprofil (7a) bietet, das mit diesem Mitnahmeprofil in einer Verankerungszone (A) zusammenwirkt, um den Bremsbelag zu halten, wenn dieser von den Mitnahmekräften in der Drehrichtung der Scheibe beaufschlagt wird, und wobei wenigstens das erste Ende (31) jedes Bremsbelags eine äußere Berührfläche (31b) aufweist, die in einer Abstützzone (B) an einer entsprechenden inneren Berührfläche (8b) eines ersten Anschlags (8) anliegen kann, der an der ersten Aufnahme (11) des Trägers dieses Bremsbelags vorgesehen ist, dadurch gekennzeichnet, daß jeder Bremsbelag bezüglich seines Trägers und zur Abstützzone mittels einer elastischen Kraft (F) beaufschlagt ist, die wenigstens eine erste Komponente (F1) aufweist, die entlang dem durch die zentrale Reibungszone (30) der Scheibe (6) verlaufenden Radius (R) ausgerichtet ist, daß jeder Bremsbelag eine relative Drehfreiheit in seiner Ebene um die Verankerungszone (A) aufweist, daß die innere und die äußere Berührfläche (8b, 31b) zusammen in der Abstützzone eine Tangente (T) in einer den Bremsbelag enthaltenden Ebene definieren, daß eine die Verankerungszone (A) mit der Abstützzone (B) verbindende Gerade (D) mit der Tangente (T) einen Winkel (G) bildet, in dessen Inneren sich ein Abschnitt der zentralen Reibungszone (30) befindet, und daß dieser Winkel stumpf und kleiner als ein gestreckter Winkel ist.

2. Scheibenbremse nach Anspruch 1, dadurch gekennzeichnet, daß wenigstens eine der beiden Berührflächen (31b) ein abgerundetes Profil hat und daß diese Flächen Krümmungsradien aufweisen, die sich wenigstens in der Abstützzone unterscheiden.

3. Scheibenbremse nach Anspruch 2, dadurch gekennzeichnet, daß eine der beiden Berührflächen (8b, 31b) konkav und die andere konvex ist, wobei jede konkave Berührfläche einen Krümmungsradius hat, der größer als der Krümmungsradius der zugehörigen konvexen Fläche ist.

4. Scheibenbremse nach Anspruch 3, dadurch gekennzeichnet, daß die beiden Berührflächen ein abgerundetes Profil haben, wobei jede konkave Berührfläche einen Krümmungsradius hat, der größer als der Krümmungsradius der zugehörigen konvexen Fläche ist.

5. Scheibenbremse nach einem der vorhergehenden Ansprüche, dadurch gekennzeichnet, daß das Mitnahmeprofil (32a) eine Aussparung aufweist, die an dem Bremsbelag vorgesehen ist und bezüglich der Scheibe nach außen geöffnet ist, und daß das Halteprofil (7a) eine Haltelasche aufweist, die an dem Träger des Bremsbelags vorgesehen ist, bezüglich der Scheibe nach innen ausgerichtet ist und in diese Aussparung eingreift.

6. Scheibenbremse nach Anspruch 5, dadurch gekennzeichnet, daß die erste Komponente (F1) der elastischen Kraft zentrifugal ausgerichtet ist.

7. Scheibenbremse nach einem der vorhergehenden Ansprüche, dadurch gekennzeichnet, daß die elastische Kraft eine zweite Komponente (F2) aufweist, die senkrecht zu dem durch die Mittelzone des Bremsbelags laufenden Radius (R) der Scheibe (6) ist und in der Drehrichtung (S) der Scheibe ausgerichtet ist.

8. Scheibenbremse nach einem der vorhergehenden Ansprüche, dadurch gekennzeichnet, daß jeder Bremsbelag an jedem seiner Enden eine äußere Berührfläche und ein Mitnahmeprofil aufweist.

9. Scheibenbremse nach Anspruch 8, bei der zum einen an dem Träger des Bremsbelags und zum anderen an dem Bremsbelag zwei Abstützzonen (B, B') gebildet sind, dadurch gekennzeichnet, daß jedes Seitenende (31, 32) des Bremsbelags zwischen seiner äußeren Berührfläche (31b, 32b) und seinem Mitnahmeprofil (31a, 32a) eine Breite (l₃₁, l₃₂) aufweist, die größer als eine minimale Breite (l₁₁, l₁₂) ist, welche die entsprechende Aufnahme (11, 12) des Trägers des Bremsbelags jenseits der Abstützzone (B, B') relativ zur Scheibe (6) außerhalb aufweist, woraus resultiert, daß die beiden Seitenenden (31, 32) des Bremsbelags sich gleichzeitig an dem Träger des Bremsbelags in ihren entsprechenden Abstützzonen (B, B') abstützen.

10. Scheibenbremse nach einem der vorhergehenden Ansprüche, dadurch gekennzeichnet, daß die innere Berührfläche in der Abstützzone im wesentlichen eben (P) ist.

## Claims

1. Disk brake for a motor vehicle, comprising a first support (1) which is fixed with respect to the vehicle, a second support (2) shaped into a caliper and slidably with respect to the first one, pads (3, 4) each of which is held by one of the supports (1) so as to resist the drive forces to which it is subjected in the event of braking, and a brake motor (5) associated with the second support (2) and capable of being actuated so as to give rise to the application of said pads onto the disk (6) according to a movement which is substantially perpendicular to the latter, each pad (3) having a central friction zone (30) where the resultant of the drive forces is applied and two lateral ends (31, 32), the first (31) of which is offset with respect to the central zone in the direction of rotation (S) of the disk (6) and at least the second (32) of which has a drive profile (32a), the support of this pad having two housings (11, 12), the second (12) of which presents a retaining profile (7a) interacting with this drive profile in a fastening zone (A) in order to retain this pad when it is stressed in the direction of rotation of the disk by the drive forces, and at least the first end (31) of each pad having an external contact surface (31b) suitable for abutting, in a bearing zone (B), against a corresponding internal contact surface (8b) of a first bearing surface (8) provided on the first housing (11) of the support for this pad, characterized in that each pad is stressed with respect to its support and towards the bearing zone by an elastic force (F) having at least one first component (F1) pointing along the radius (R) of the disk (6) which passes through the central friction zone (30), in that each pad has a relative freedom of rotation in its plane about the fastening zone (A), in that the internal and external contact surfaces (8b, 31b) together define, in the bearing zone, a tangent (T) in a plane containing the pad, in which a straight line (D) connecting the fastening zone (A) to the bearing zone (B) defines, together with said tangent (T), an angle (G) inside which a part of the central friction zone (30) is located, and in that this angle is obtuse and less than a flat angle.

2. Disk brake according to Claim 1, characterized in that at least one of the two contact surfaces (31b) has a rounded profile, and in that these surfaces have different radii of curvature at least in the bearing zone.

3. Disk brake according to Claim 2, characterized in that one of the two contact surfaces (8b, 31b) is concave and the other convex, each concave contact surface having a radius of curvature which is greater than the radius of curvature of the corresponding convex surface.

4. Disk brake according to Claim 3, characterized in that the two contact surfaces have a rounded profile, each concave contact surface having a radius of curvature which is greater than the radius of curvature of the corresponding convex surface.

5. Disk brake according to any one of the preceding claims, characterized in that the drive profile (32a) comprises a slot provided on the pad and open towards the outside of the disk and in that the retaining profile (7a) comprises a retaining tab provided on the pad support, pointing towards the inside of the disk and engaged in this slot.

6. Disk brake according to Claim 5, characterized in that the first component (F1) of the elastic force is centrifugal.

7. Disk brake according to any one of the preceding claims, characterized in that the elastic force has a second component (F2) perpendicular to the radius (R) of the disk (6) passing through the central zone of the pad and pointing in the direction (S) of rotation of the disk.

8. Disk brake according to any one of the preceding claims, characterized in that each pad includes an external contact surface and drive profile at each of its ends.

9. . Disk brake according to Claim 8, in which two bearing zones (B, B') are defined on the pad support on either side of the pad, characterized in that each lateral end (31, 32) of the pad has, between its external contact surface (31b, 32b) and its drive profile (31a, 32a) a width (l₃₁, l₃₂) greater than a minimal width (l₁₁, l₁₂) which the corresponding housing (11, 12) of the pad support has beyond the bearing zone (B, B') towards the outside of the disk (6), which results in the two lateral ends (31, 32) of the pad bearing simultaneously on the pad support in their respective bearing zones (B, B').

10. Disk brake according to any one of the preceding claims, characterized in that said internal contact surface is substantially plane (P) in the bearing zone.
